# EUROPEAN PATENT APPLICATION

(11) **EP 4 604 219 A1**
(43) Date of publication of application: **20.08.2025**
(21) Application number: 24852950.5
(22) Date of filing: 30.08.2024
(51) Int. Cl.: H01M 4/62, H01M 4/38, H01M 10/0525, C01B 32/05

(54) **CARBON MATERIAL, NEGATIVE ELECTRODE MATERIAL AND BATTERY**

(30) Priority: 28.12.2023 CN 202311853136
(71) Applicant: BTR NEW MATERIAL GROUP CO., LTD., Shenzhen, Guangdong 518106 (CN)
(72) Inventor: LIU, Mingjie, Shenzhen Guangdong 518106 (CN); HE, Peng, Shenzhen Guangdong 518106 (CN); XIAO, Chengmao, Shenzhen Guangdong 518106 (CN); GUO, Eming, Shenzhen Guangdong 518106 (CN); REN, Jianguo, Shenzhen Guangdong 518106 (CN); HE, Xueqin, Shenzhen Guangdong 518106 (CN)
(74) Representative: advotec.
(86) International application number: PCT/CN2024/115846
(87) International publication number: WO 2025/138984

(57) **Abstract**

A carbon material, an anode material and a battery provided. The carbon material has a total pore volume of 0.5 cm³/g to 1.6 cm³/g. The carbon material has a crush strength of U₁ kN/cm², where 0.05≤U₁≤0.3. The carbon material has appropriate pores providing sufficient storage space for the silicon material, relieving volume expansion of the silicon material. Moreover, crush strength of the carbon material is controlled within an appropriate range, allowing the carbon material to have an excellent structure stability. Thus, collapse and crush of structure of the carbon material caused by volume expansion during lithiation and delithiation are reduced, and occurrence of a side reaction is reduced, thereby improving capacity and cycling performance of the anode material.

## Description

### CROSS-REFERENCE OF RELATED APPLICATIONS

This application is a National Stage of International Application No. PCT/CN2024/115846, filed on August 30, 2024, which claims the benefit of priority to Chinese Patent Application No. 202311853136.2, entitled "CARBON MATERIAL, ANODE MATERIAL AND PREPARATION METHOD THEREOF, AND BATTERY" filed on December 28th, 2023, the entire contents of which are incorporated herein by reference.

### TECHNICAL FIELD

The present disclosure relates to the technical field of anode material, and in particular, to a carbon material, an anode material and a battery.

### BACKGROUND

Lithium ion battery is widely applied in electric vehicles and consumer electronic products due to the advantages of high energy density, long cycle life, low environmental pollution, and no memory effect, etc. At present, commercial lithium ion battery mainly adopts a graphite anode material with a theoretical capacity of, however, only 372 mAh/g, which has not met the current requirement for high capacity and high energy density of lithium ion battery. In order to improve energy density of a lithium ion battery, an anode material with high capacity has been searched. A silicon based anode material has attracted attention due to its theoretical specific capacity of up to 4200 mAh/g, which is considered to be a most promising anode material for a lithium ion battery.

However, silicon occurs a great volume change during delithiation/lithiation, which tends to result in pulverization of a silicon particle, then being stripped from current collector. The volume of a silicon based anode material repeatedly changes during electrochemical cycling, resulting in continuous destruction and regeneration of solid electrolyte interphase (SEI film) formed on surface of the silicon based anode material, leading to continuous consumption of lithium ion, and finally causing rapid degradation of capacity. Due to the above disadvantages of silicon, a composite material of silicon and carbon has been researched, among which significant progress has been made in a carbon coated silicon composite material. Coating carbon material on surface of silicon particle relieves large volume change of the silicon based anode material, and constructs a conductive network to improve conductivity performance. This, to some extent, inhibites volume expansion of crystalline silicon, but fails to fundamentally solve the problem.

Compared with the crystalline silicon, amorphous silicon material has smaller volume expansion, which reduce volume expansion of a silicon carbon composite material. An amorphous silicon carbon material, during its synthesis, retains some pores of porous carbon, providing a certain buffering effect against the volume expansion of the silicon carbon composite material. However, too many pores lead to a decrease in structure stability of the silicon carbon composite material, making the material prone to be crushed, and resulting in poor performance of the material.

Therefore, it is still a problem to be solved at present for how to inhibit the volume expansion of the silicon based anode material and improve structure stability of the anode material.

### SUMMARY

The present disclosure provides a carbon material, an anode material, and a battery. The carbon material of the present disclosure has appropriate pores providing sufficient storage space for the silicon material, relieving volume expansion of the silicon material. At the same time, crush strength of the carbon material is controlled within an appropriate range, allowing the carbon material to have an excellent structure stability. Thus, collapse and crush of structure of the carbon material caused by volume expansion during lithiation and delithiation are reduced, and occurrence of a side reaction is reduced, thereby improving capacity and cycling performance of the anode material.

In a first aspect, some embodiments of the present disclosure provide a carbon material. The carbon material has a pore. The carbon material has a total pore volume of 0.5 cm³/g to 1.6 cm³/g. The carbon material has a crush strength of U₁ kN/cm², where 0.05≤U₁≤0.3.

In some embodiments, the pore in the carbon material includes an open pore and a closed pore. The carbon material includes at least one of the following features:
(1) the closed pore in the carbon material accounts for a volume proportion of A% of the total pore volume, where 1.0≤A≤5.0;
(2) the open pore in the carbon material accounts for a volume proportion of B% of the total pore volume, where 95.0≤B≤99.0; and
(3) the pore in the carbon material includes micropore, mesopore and macropore, where the micropore accounts for a volume proportion of 60% to 97% of the total pore volume.

In some embodiments, the carbon material includes at least one of biomass based porous carbon, synthetic polymer based porous carbon, and tar coal based porous carbon.

In a second aspect, some embodiments of the present disclosure provide an anode material. The anode material includes a carbon material and a silicon material. The carbon material has a pore, and at least part of the silicon material is distributed in the pore of the carbon material. An anode material removed the silicon material has a total pore volume of 0.5 cm³/g to 1.6 cm³/g, and a crush strength of U₁ kN/cm², where 0.05≤U₁≤0.3.

In some embodiments, the pore in the carbon material includes an open pore and a closed pore. The carbon material includes at least one of the following features:
(1) the closed pore in the carbon material accounts for a volume proportion of A% of the total pore volume, where 1.0≤A≤5.0;
(2) the open pore in the carbon material accounts for a volume proportion of B% of the total pore volume, where 95.0≤B≤99.0; and
(3) the pore in the carbon material includes micropore, mesopore and macropore, where the micropore accounts for a volume proportion of 60% to 97% of the total pore volume.

In some embodiments, the carbon material includes at least one of biomass based porous carbon, synthetic polymer based porous carbon, and tar coal based porous carbon.

In a third aspect, some embodiments of the present disclosure provide an anode material. The anode material includes a carbon material and a silicon material. The carbon material has pores, and at least part of the silicon material is distributed in the pore of the carbon material.

The anode material has a pore including an open pore and a closed pore. The closed pore has a pore volume accounting for a volume proportion of P₁% of the anode material, where 0.1≤P₁≤5. The open pore has a pore volume accounting for a volume proportion of P₂% of the anode material, where 0.1≤P₂≤20. And

The anode material has a crush strength of U₂ kN/cm², where 0.35≤U₂≤1.5.

In some embodiments, the anode material includes at least one of the following features:
(1) an anode material removed the silicon material has a total pore volume of 0.3 cm³/g to 1.5 cm³/g;
(2) an anode material removed the silicon material has a pore including micropore, mesopore and macropore, where the micropore accounts for a volume proportion of 50% to 90% of the total pore volume;
(3) closed pore in an anode material removed the silicon material accounts for a volume proportion of 3.0% to 6.0% of the total pore volume; and
(4) open pore in an anode material removed the silicon material accounts for a volume proportion of 94.0% to 97.0%.

In some embodiments, the anode material includes at least one of the following features:
(5) the silicon material includes at least one of amorphous silicon, crystalline silicon, silicon oxide, or silicon alloy; and
(6) the silicon material has an average particle size of 1 nm to 5 nm.

In some embodiments, the anode material, with a mass of 100%, contains silicon element accounting for a mass content of 10% to 85%.

In some embodiments, the anode material has a true density of ρ g/cm³, where 1.2≤ρ≤3.0.

In some embodiments, the anode material has a total pore volume of 0.01 cm³/g to 0.10 cm³/g.

In some embodiments, the anode material has particle sizes satisfying 1 µm≤Dₘᵢₙ≤3 µm, 6 µm≤D₅₀≤8 µm, and Dₘₐₓ≤30 µm.

In some embodiments, the anode material has a specific surface area of 0.8 m²/g to 20 m²/g.

In a fourth aspect, some embodiments of the present disclosure include a battery. The battery includes the carbon material according to any embodiment of the first aspect, and the anode material according to any embodiment of the second aspect and the third aspect.

Compared with the related art, the technical solution of the present disclosure has at least the following beneficial effects:
The present disclosure provides a carbon material. The carbon material has a pore. The carbon material has a total pore volume of 0.5 cm³/g to 1.6 cm³/g. The carbon material has appropriate pores providing sufficient storage space for the silicon material, relieving volume expansion of the silicon material. In addition, the carbon material has a crush strength of U₁ kN/cm², where 0.05≤U₁≤0.3. The crush strength of the carbon material is related to the pores in the carbon material. The carbon material has the crush strength within the above range, allowing the carbon material to have an excellent structure stability, and allowing a carbon material compounded with the silicon material also to have an excellent structure stability. Thus, collapse and crush of structure of the carbon material caused by volume expansion of the silicon material during lithiation and delithiation are reduced, and occurrence of a side reaction is reduced, thereby improving capacity and cycling performance of the anode material.

The present disclosure provides an anode material. The anode material includes a carbon material and a silicon material. The carbon material has pores, and at least part of the silicon material is distributed in the pore of the carbon material. Thus capacity of the anode material is increased. Additionally, the carbon material, filled with the silicon material, has reduced pores, allowing to improve density of the anode material, and thereby improving structure stability and cycling performance of the anode material. Meanwhile, the anode material has a pore including an open pore and a closed pore. The closed pore has a pore volume accounting for a volume proportion of P₁% of the anode material, where 0.1≤P₁≤5. The open pore has a pore volume accounting for a volume proportion of P₂% of the anode material, where 0.1≤P₂≤20. And, the anode material has a crush strength of U₂ kN/cm², where 0.35≤U₂≤1.5. The closed pore in the anode material has the pore volume accounting for a volume proportion within the above range, which allows appropriate open and closed pores present in the anode material, thereby improving structure stability and crush strength of the anode material, reducing probability of crush of the anode material during cycling, and improving cycling performance of the anode material. Moreover, the appropriate closed pore in the anode material provides a certain buffer space for volume expansion of the silicon material, thereby inhibiting volume expansion of the anode material, reducing collapse and crush of structure of the carbon material caused by the volume expansion during lithiation and delithiation, and improving cycling performance of the anode material. In addition, the open pore in the anode material has the pore volume accounting for a volume proportion within the above range, on the one hand, this allows the silicon material to fill the pore of the carbon material for increasing capacity of the anode material; on the other hand, the carbon material, filled with the silicon material, has reduced inner pores, allowing to improve density of the anode material, and thereby improving structure stability and crush strength of the anode material. Moreover, the open pore in the anode material in an appropriate range provides a certain buffer space for volume expansion of the silicon material, inhibiting volume expansion of the anode material, thereby reducing collapse and crush of structure of the carbon material caused by the volume expansion during lithiation and delithiation, and improving cycling performance of the anode material. Furthermore, the open pore in the anode material has the pore volume accounting for a volume proportion within the above range, reducing contact area between an electrolyte and the anode material, thereby making the electrolyte not to easily penetrate into the anode material, then effectively reducing occurrence of a side reaction between the anode material and the electrolyte, and improving electrochemical performance of the anode material. In summary, controlling volume proportions of pore volumes of the closed and open pores in the anode material within appropriate ranges allows appropriate closed and open pores present in the anode material, improving the crush strength of the anode material by a synergistic effect between the closed and open pores, and balancing the volume proportion of the closed pore, the volume proportion of the open pores, and the crush strength of the anode material, thereby inhibiting volume expansion of the anode material, improving structure stability of the anode material, and further improving electrochemical performance of the anode material.

Some embodiments of the present disclosure also provide a preparation method of an anode material: firstly, carbonizing a mixture containing a carbon source and an activator at 800°C to 1100°C. During the carbonizing, the carbon source is decomposed at the above temperature range into a carbon material, while simultaneously the carbon material reacts with the activator. The activator intrudes into the carbon material and forms numerous pores, resulting in a carbon material with pores. Meanwhile, by controlling reaction temperature of the above preparation process, the carbon material develops a pore with appropriate structure. By combining with silicon material, the pore structure provides a sufficient buffer space for volume expansion of the silicon material, thereby inhibiting volume expansion of the anode material. Moreover, the appropriate pore present in the carbon material also improves crush strength and structure stability of the carbon material. Secondly, performing a vapor deposition on the obtained carbon material by using silicon source gas for 30 min to 150 min. During the vapor deposition, the appropriate pore in the carbon material facilitates the silicon source gas to enter the carbon material and permeate interior of the carbon material through the pore therein, to allow the silicon material to be evenly filled inside the pore of the carbon material to obtain an active material, thereby increasing capacity of the anode material. Meanwhile, the appropriate pore structure present in the carbon material also provides a certain buffer space for volume expansion of the silicon material, and improves structure stability of the carbon material to a certain extent. By controlling deposition duration within the above range, on the one hand, the silicon material is sufficiently and uniformly filled in pores of the carbon material, facilitating to increase capacity of the anode material, while, appropriate filling of the silicon material reduces part of pores in the carbon material, thereby facilitating to improve structure stability and crush strength of the anode material. On the other hand, an excessive filling of the silicon material is reduced, so that the pore structure in the anode material is controlled within an appropriate range, thereby providing a certain buffer space for volume expansion of the silicon material, inhibiting the volume expansion of the anode material, and improving cycling performance of the anode material. Finally, carbon coating the active material, so as to further isolates a direct contact of the active material and the electrolyte, thereby reducing occurrence of a side reaction on surface of the anode material, inhibiting excessive growth of solid electrolyte interface (SEI) film on surface of the anode material, minimizing consumption of active lithium ions, and further enhancing capacity, initial efficiency, and cycling performance of the anode material.

### BRIEF DESCRIPTION OF DRAWINGS

The following further describes the present disclosure with reference to the accompanying drawings and embodiments.
FIG. 1 is a scanning electron micrograph of the anode material prepared by Example 1 of the present disclosure; and
FIG. 2 is a sectional view of the anode material prepared by Example 1 of the present disclosure.

### DESCRIPTION OF EMBODIMENTS

In order to better understand the technical solutions of the present disclosure, embodiments of the present disclosure are described in detail below with reference to the accompanying drawings.

It should be made clear that the embodiments described are only part of rather than all of the embodiments of the present disclosure. All other embodiments obtained by those skilled in the art based on the embodiments of the present disclosure without creative efforts should fall within the protection scope of the present disclosure.

The terms used in the embodiments of the present disclosure are merely for the purpose of describing particular embodiments but not intended to limit the present disclosure. Unless otherwise noted in the context, the singular form expressions "a", "the" and "said" used in the embodiments and appended claims of the present disclosure are also intended to represent plural form expressions thereof.

It should be understood that the term "and / or" used herein is merely an association relationship describing an associated object, and indicates that there may be three relationships. For example, A and/or B may indicate three situations: only A, both A and B, and only B. In addition, the character "/" herein generally means an "or" relationship between the preceding and subsequent associated objects.

In a first aspect, some embodiments of the present disclosure provide a carbon material. The carbon material has a pore. The carbon material has a total pore volume of 0.5 cm³/g to 1.6 cm³/g. The carbon material has a crush strength of U₁ kN/cm², where 0.05≤U₁≤0.3.

The present disclosure provides a carbon material. The carbon material has a pore. The carbon material has a total pore volume of 0.5 cm³/g to 1.6 cm³/g. The carbon material has appropriate pores providing sufficient storage space for the silicon material, relieving volume expansion of the silicon material. In addition, the carbon material has a crush strength of U₁ kN/cm², where 0.05≤U₁≤0.3. The crush strength of the carbon material is closely related to the pores in the carbon material. The carbon material has the crush strength within the above range, allowing the carbon material to have an excellent structure stability, and allowing a carbon material compounded with the silicon material also to have an excellent structure stability. Thus, collapse and crush of structure of the carbon material caused by volume expansion of the silicon material during lithiation and delithiation are reduced, and occurrence of a side reaction between the carbon material compounded with the silicon material and electrolyte is reduced, thereby improving capacity and cycling performance of the carbon material compounded with the silicon material.

In some embodiments, the pore in the carbon material includes an open pore and a closed pore.

In some embodiments, the closed pore in the carbon material accounts for a volume proportion of A% of the total pore volume, where 1.0≤A≤5.0, which may specifically be 1.0%, 1.2%, 1.5%, 2.0%, 2.5%, 3.0%, 3.5%, 4.0%, 4.5%, or 5.0%, etc., or other value within the above range, which is not limited herein. It is understood that, the volume proportion of the closed pore in the carbon material is controlled within the above range, allowing the carbon material to have appropriate open and closed pores. On the one hand, it facilitates to improve structure stability and crush strength of the carbon material; and on the other hand, during compounding the carbon material and silicon, the appropriate closed pores in the carbon material provides a certain buffer space for volume expansion of silicon, thereby inhibiting volume expansion of the carbon material compounded with the silicon material, and improving cycle performance of the carbon material compounded with the silicon material. For example, the closed pore in the carbon material accounts for a volume proportion of 1.5% to 4.0%.

In some embodiments, the open pore in the carbon material accounts for a volume proportion of B% of the total pore volume, where 95.0≤B≤99.0, which may specifically be 95.0%, 95.5%, 96.0%, 96.5%, 97.0%, 98.5%, 98.6%, 98.7%, 98.8%, or 99.0%, etc., or other value within the above range, which is not limited herein. It is understood that, the volume proportion of the open pore in the carbon material is within the above range, thus during compounding the carbon material and the silicon material, the silicon material permeates and diffuses into the carbon material through the pore therein for filling. On the one hand, specific capacity of the anode material is increased. On the other hand, the carbon material, filled with the silicon material, has reduced pores, allowing to improve density of the anode material, and thereby improving structure stability of the anode material. For example, the open pore in the carbon material accounts for a volume proportion of 96.0% to 98.5%.

In some embodiments of the present disclosure, the crush strength of the carbon material may specifically be 0.05 kN/cm², 0.08 kN/cm², 0.1 kN/cm², 0.15 kN/cm², 0.2 kN/cm², 0.25 kN/cm², 0.3 kN/cm², etc., or any other value within the foregoing range, which is not limited herein. It is understood that, the carbon material has the crush strength within the above range, facilitating to improve structure stability of the carbon material, and reduce probability of crush of the carbon material during cycling.

In some embodiments, the carbon material has a total pore volume of 0.5 cm³/g to 1.6 cm³/g, which may specifically be 0.5 cm³/g, 0.8 cm³/g, 1.0 cm³/g, 1.1 cm³/g, 1.15 cm³/g, 1.2 cm³/g, 1.3 cm³/g, 1.5 cm³/g or 1.6 cm³/g, etc., or any other value within the above range, which is not limited herein. It is understood that, the carbon material is rich in pores, which is able to store the silicon material and reserve a space for volume expansion of the silicon material, thereby relieving expansion effect of the anode material prepared by the carbon material, and improving cycle stability of the anode material prepared by the carbon material.

In some embodiments, the pore in the carbon material includes micropore, mesopore and macropore, where the micropore accounts for a volume proportion of 60% to 97% of the total pore volume, which may specifically be 60%, 70%, 75%, 80%, 85%, 90%, 95%, 96%, or 97%, etc., or other value within the above range, which is not limited herein. It is understood that, controlling the volume proportion of the micropore in the carbon material increases adsorption capacity of the carbon material to the silicon material, and promotes diffusion of the silicon material in the carbon material, thereby improving deposition uniformity of the silicon material in the carbon material, and reducing deposition of the silicon material on surface of the carbon material. In the present disclosure, the volume proportion of the micropore in the carbon material is controlled within the above range, thus during deposition involving the silicon material and the carbon material, the deposition of the silicon material on surface of the carbon material is reduced, and the silicon material is allowed to be uniformly deposited in the pore of the carbon material instead of on its surface, thereby inhibiting volume expansion of the anode material prepared by the carbon material, and improving electrochemical performance of the anode material prepared by the carbon material.

In some embodiments, the carbon material includes at least one of biomass based porous carbon, synthetic polymer based porous carbon, and tar coal based porous carbon.

In a second aspect, some embodiments of the present disclosure provide an anode material. The anode material includes the carbon material and the silicon material of the first aspect. At least part of the silicon material is distributed in the pore of the carbon material. That is, the anode material includes a carbon material and a silicon material. The carbon material has a pore, and at least part of the silicon material is distributed in the pore of the carbon material. An anode material removed the silicon material has a total pore volume of 0.5 cm³/g to 1.6 cm³/g, and a crush strength of U₁ kN/cm², where 0.05≤U₁≤0.3. It is understood that, filling the silicon material in the pore of the carbon material increases capacity of the anode material. Additionally, the carbon material, filled with the silicon material, has reduced pores, allowing to improve density of the anode material, improve structure stability of the anode material, and thereby improving cycling performance of the battery prepared by the anode material. In addition, the pore in the carbon material also provides sufficient buffer space for volume expansion of the silicon material, thereby inhibiting volume expansion of the anode material, reducing collapse and crush of structure of the anode material caused by volume expansion during lithiation and delithiation, effectively reducing occurrence of a side reaction between the anode material and electrolyte, and thus improving capacity and cycle performance of the anode material.

In a third aspect, some embodiments of the present disclosure provide an anode material. The anode material includes a carbon material and a silicon material. The carbon material has pores, and at least part of the silicon material is distributed in the pore of the carbon material.

The anode material a pore including an open pore and a closed pore. The closed pore has a pore volume accounting for a volume proportion of P₁% of the anode material, where 0.1≤P₁≤5. The open pore has a pore volume accounting for a volume proportion of P₂% of the anode material, where 0.1≤P₂≤20. The anode material has a crush strength of U₂ kN/cm², where 0.35≤U₂≤1.5.

The present disclosure provides an anode material. The anode material includes a carbon material and a silicon material. The carbon material has pores, and at least part of the silicon material is distributed in the pore of the carbon material. Thus capacity of the anode material is increased. Additionally, the carbon material, filled with the silicon material, has reduced pores, allowing to improve density of the anode material, and thereby improving structure stability of the anode material, and improving cycling performance of the battery prepared by the anode material. Meanwhile, the anode material has a pore including an open pore and a closed pore. The closed pore has a pore volume accounting for a volume proportion of P₁% of the anode material, where 0.1≤P₁≤5. The open pore has a pore volume accounting for a volume proportion of P₂% of the anode material, where 0.1≤P₂≤20. And, the anode material has a crush strength of U₂ kN/cm², where 0.35≤U₂≤1.5. The closed pore in the anode material has the pore volume accounting for a volume proportion within the above range, allowing appropriate open and closed pores present in the anode material, which improves structure stability and crush strength of the anode material, thereby reducing probability of crush of the anode material during cycling, and improving cycling performance of the anode material. Moreover, the appropriate closed pore in the anode material provides a certain buffer space for volume expansion of the silicon material, thereby inhibiting volume expansion of the anode material, reducing collapse and crush of structure of the carbon material caused by the volume expansion during lithiation and delithiation, and improving cycling performance of the anode material. In addition, the open pore in the anode material has the pore volume accounting for a volume proportion within the above range, on the one hand, this allows the silicon material to fill the pore of the carbon material for increasing capacity of the anode material; on the other hand, the carbon material, filled with the silicon material, has reduced inner pores, allowing to improve density of the anode material, and thereby improving structure stability and crush strength of the anode material. Moreover, the open pore in the anode material in an appropriate range provides a certain buffer space for volume expansion of the silicon material, inhibiting volume expansion of the anode material, thereby reducing collapse and crush of structure of the carbon material caused by the volume expansion during lithiation and delithiation, and improving cycling performance of the anode material. Furthermore, the open pore in the anode material has the pore volume accounting for a volume proportion within the above range, reducing contact area between an electrolyte and the anode material, thereby making the electrolyte not to easily penetrate into the anode material, then effectively reducing occurrence of a side reaction between the anode material and the electrolyte, and improving electrochemical performance of the anode material. In summary, controlling volume proportions of pore volumes of the closed and open pores in the anode material within appropriate ranges allows appropriate closed and open pores present in the anode material, improving the crush strength of the anode material by a synergistic effect between the closed and open pores, and balancing the volume proportion of the closed pore, the volume proportion of the open pores, and the crush strength of the anode material, thereby inhibiting volume expansion of the anode material, improving structure stability of the anode material, and further improving electrochemical performance of the anode material.

In the present disclosure, the volume proportion of the pore volume of the closed pores in the anode material may specifically be 0.1%, 0.2%, 0.5%, 1%, 1.5%, 2%, 2.5%, 3%, 3.5%, 4%, 4.5%, 5%, etc., or other value within the above range, which is not limited herein. It is understood that, when the pore volume of the closed pore in the anode material accounts for a volume proportion of less than 0.1% of the anode material, the anode material has too less pore space therein, thus has no sufficient pore space for accommodating volume expansion of the silicon material during lithiation and delithiation; while when the pore volume of the closed pore in the anode material accounts for a volume proportion of more than 5% of the anode material, the anode material has too much pore space therein, thus has a degraded structure stability, resulting in a decreased crush strength thereof. Thus, a plate prepared by the anode material tends to occur problems, such as crushing, cracking, etc., during rolling, resulting in a poor processability of the anode material. Therefore, in the present disclosure, controlling the closed pore in the anode material to have a pore volume accounting for a volume proportion within 0.1% to 5% improves structure stability and crush strength of the anode material, effectively inhibites volume expansion of the silicon material, and reduces expansion rate of the anode material, thereby improving cycle performance of the anode material. In some embodiments, the volume proportion of the pore volume of the closed pore in the anode material accounts for 0.1% to 3%, for example, 0.2% to 2%, and for example, 0.5% to 2%.

In the present disclosure, the volume proportion of the pore volume of the open pore in the anode material may specifically be 0.1%, 0.5%, 1%, 2%, 5%, 8%, 10%, 12%, 15%, 18% or 20%, etc., or other value within the above range, which is not limited herein. It is understood that, when the pore volume of the open pore accounts for a volume proportion of less than 0.1% of the anode material, the carbon material is filled with too much the silicon material, resulting in that the anode material has too less pore space therein, thus has no sufficient pore space for accommodating volume expansion of the silicon material during lithiation and delithiation; while when the pore volume of the open pore in the anode material accounts for a volume proportion of more than 20% of the anode material, on the one hand, the carbon material is filled with too less the silicon material, resulting in a reduced capacity of the anode material, on the other hand, the anode material has too much pore space therein, thus has a reduced density and a degraded structure stability, resulting in a decreased crush strength thereof. Thus, a plate prepared by the anode material tends to occur problems, such as crushing, cracking, etc., during rolling, resulting in a poor processability of the anode material. In addition, the anode material has much open pores therein, increasing its contact area with electrolyte, and intensifying its side reaction with the electrolyte, thereby decreasing its electrochemical performance. Therefore, in the present disclosure, controlling the open pore in the anode material to have a pore volume accounting for a volume proportion within 0.1% and 20%, on the one hand, facilitates to improve capacity of the anode material, on the other hand, improves structure stability and crush strength of the anode material, as well as, reduces occurrence of a side reaction between the electrolyte and the anode material, effectively inhibites volume expansion of the anode material, reducing expansion rate thereof, thereby improving electrochemical performance of the anode material. In some embodiments, the volume proportion of the pore volume of the open pore in the anode material accounts for 0.1% to 10%, and for example, 0.2% to 5%.

The crush strength of the anode material may specifically be 0.35 kN/cm², 0.4 kN/cm², 0.5 kN/cm², 0.8 kN/cm², 1.0 kN/cm², 1.1 kN/cm², 1.2 kN/cm², 1.3 kN/cm, 1.4 kN/cm² or 1.5 kN/cm², etc., or any other value within the above range, which is not limited herein. It is understood that, the crush strength of the anode material refers to an ability of the anode material to resist crushing when subjected to an external force. If the crush strength of the anode material is relatively low, the anode material is prone to crushing. In the present disclosure, the crush strength of the anode material is controlled within the above range, thus the anode material has a good structure stability, thereby being able to withstand an expansion stress generated in the silicon material during lithiation and delithiation, reducing probability of crush of the anode material during cycling, and thus improving electrochemical performance of the anode material. In some embodiments, the crush strength of the anode material is 0.2 kN/cm² to 1.2 kN/cm². In some embodiments, the crush strength of the anode material is 0.5 kN/cm² to 1.0 kN/cm².

In some embodiments, the anode material removed the silicon material has a total pore volume of 0.3 cm³/g to 1.5 cm³/g, which may specifically be 0.3 cm³/g, 0.5 cm³/g, 0.8 cm³/g, 1.0 cm³/g, 1.1 cm³/g, 1.2 cm³/g, 1.3 cm³/g or 1.5 cm³/g, etc., which is not limited to the recited values, and other unrecited value within the numerical range is also applicable. It is understood that, the anode material removed the silicon material is rich in pores, which is able to store the silicon material and reserve a space for volume expansion of the silicon material, thereby relieving expansion effect of the anode material, and improving cycle stability of the anode material.

In some embodiments, the anode material removed the silicon material has a pore including micropore, mesopore and macropore, where the micropore accounts for a volume proportion of 50% to 90% of the total pore volume, which may specifically be 50%, 60%, 65%, 70%, 75%, 80%, 85%, 86% or 90%, etc., or other value within the above range, which is not limited herein. It is understood that, the anode material removed the silicon material is almost the carbon material. In the present disclosure, the volume proportion of the micropore in the carbon material is controlled within the above range, thus during deposition involving the silicon material and the carbon material, the deposition of the silicon material on surface of the carbon material is reduced, and the silicon material is allowed to be uniformly deposited in the pore of the carbon material instead of on its surface, thereby inhibiting volume expansion of the anode material, and improving electrochemical performance of the anode material.

In some embodiments, the closed pore in the anode material removed the silicon material accounts for a volume proportion of 3.0% to 6.0% of the total pore volume, which may specifically be 3.0%, 3.5%, 4.0%, 4.2%, 4.5%, 5.0%, 5.5% or 6.0%, etc., or other value within the above range, which is not limited herein. It is understood that, the closed pore in the anode material removed the silicon material accounts for a volume proportion in the total pore volume within the above range, which allows appropriate closed pore present in the anode material, thereby improving structure stability and crush strength of the anode material, reducing probability of crush of the anode material during cycling, and improving cycling performance of the anode material.

In some embodiments, the open pore in an anode material removed the silicon material accounts for a volume proportion of 94.0% to 97.0%, which may specifically be 94.0%, 94.5%, 95%, 95.0%, 95.5%, 96%, 96.5%, or 97%, etc., or other value within the above range, which is not limited herein.

In some embodiments, the silicon material includes at least one of amorphous silicon, crystalline silicon, silicon oxide, or silicon alloy.

In some embodiments, the silicon material has an average particle size of 1 nm to 5 nm, which may specifically be 1 nm, 1.5 nm, 2 nm, 2.5 nm, 3 nm, 3.5 nm, 4 nm, 4.5 nm or 5 nm, etc., but is not limited to the recited values, and other unrecited value within the range is also applicable. It is understood that, controlling the average particle size of the silicon material within this range facilitates to improve uniformity of distribution of the silicon material in the pore of the carbon material, to inhibit volume expansion of the anode material, and to improve capacity and cycle performance of the anode material.

In some embodiments, the anode material, with a mass of 100%, contains silicon element accounting for a mass content of 10% to 85%, which may specifically be 10%, 20%, 30%, 40%, 50%, 60%, 70%, 80%, 82%, 83%, or 85%, etc., or other value within the above range, which is not limited herein. It is understood that, controlling mass content of the silicon element in the anode material within the above range facilitates to improve capacity of the anode material, to inhibit volume expansion of the anode material, to improve structure stability of the anode material, and to improve cycle performance of the anode material.

In some embodiments, the anode material further includes a carbon layer on at least part of surface thereof.

In some embodiments, the anode material further includes a carbon layer on at least part of surface thereof, and the carbon layer includes amorphous carbon. It is understood that the carbon layer on surface of the anode material further isolate direct contact between the anode material and the electrolyte, thereby effectively reducing occurrence of a side reaction between the anode material and the electrolyte, inhibiting excessive growth of solid electrolyte interface (SEI) film on surface of the anode material, minimizing consumption of active lithium ions, and further enhancing capacity, initial efficiency, and cycling performance of the anode material.

In some embodiments, the anode material further includes a carbon layer on at least part of surface thereof, and the carbon layer has a thickness of 5 nm to 500 nm, which may specifically be 5 nm, 10 nm, 50 nm, 100 nm, 200 nm, 300 nm, 400 nm or 500 nm, etc., but is not limited to the recited values, and other unrecited value within the numerical range is also applicable. In some embodiments, the carbon layer has a thickness of 10 nm to 100 nm.

In some embodiments, the anode material has a true density of ρ g/cm³, where 1.2≤ρ≤3.0. The true density of the anode material may specifically be 1.2 g/cm³, 1.3 g/cm³, 1.5 g/cm³, 1.8 g/cm³, 2.0 g/cm³, 2.1 g/cm³, 2.5 g/cm³, 2.8 g/cm³ or 3.0 g/cm³, etc., which is not limited herein. It is understood that controlling the true density of the anode material within the above range facilitates to improve energy density of the battery prepared by the anode material.

In some embodiments, the anode material has a total pore volume of 0.01 cm³/g to 0.10 cm³/g, which may specifically be 0.01 cm³/g, 0.02 cm³/g, 0.05 cm³/g, 0.06 cm³/g, 0.07 cm³/g, 0.08 cm³/g or 0.10 cm³/g, etc., which is not limited to the recited value, and other unrecited value within the numerical range is also applicable.

In some embodiments, the anode material has particle sizes satisfying 1 µm≤Dₘᵢₙ≤3 µm, 6 µm≤D₅₀≤8 µm, and Dₘₐₓ≤30 µm.

For example, the particle size Dₘᵢₙ of the anode material may specifically be 1 µm, 1.2 µm, 1.5 µm, 1.8 µm, 2 µm, 2.3 µm, 2.5 µm, or 3 µm, etc., which is not limited herein. The particle size D₅₀ of the anode material may specifically be 6 µm, 6.2 µm, 6.5 µm, 6.8 µm, 7 µm, 7.3 µm, 7.5 µm, or 8 µm, etc., which is not limited herein. The particle size Dₘₐₓ of the anode material may specifically be 1 µm, 3 µm, 5 µm, 8 µm, 10 µm, 15 µm, 18 µm, 20 µm, 25 µm, or 30 µm, etc., which is not limited herein.

In some embodiments, the anode material has a specific surface area of 0.8 m²/g to 20 m²/g, which may specifically be 0.8 m²/g, 1.0 m²/g, 5 m²/g, 8 m²/g, 10 m²/g, 12 m²/g, 14 m²/g, 15 m²/g, 16 m²/g, 18 m²/g, or 20 m²/g, etc., or other value within the above range, which is not limited herein. It is understood that controlling the specific surface area of the anode material within the above range facilitates to improve cycle performance of the battery prepared by the anode material.

In a fourth aspect, embodiments of the present disclosure provide a preparation method of an anode material, including the following steps:
Step S10, carbonizing a mixture containing a carbon source and an activator at 800°C to 1100°C to obtain a carbon material with pores, where the carbon material has a total pore volume of 0.5 cm³/g to 1.6 cm³/g, and a crush strength of U₁ kN/cm², where 0.05≤U₁≤0.3;
Step S20: performing a vapor deposition on the carbon material with pores by using silicon source gas for 30 min to 150 min to obtain an active material; and
Step S30, carbon coating the active material to obtain the anode material.

Some embodiments of the present disclosure also provide a preparation method of an anode material: firstly, carbonizing a mixture containing a carbon source and an activator at 800°C to 1100°C. During the carbonizing, the carbon source is decomposed at the above temperature range into a carbon material, while simultaneously the carbon material reacts with the activator. The activator intrudes into the carbon material and forms numerous pores, resulting in a carbon material with pores. Meanwhile, by controlling reaction temperature of the above preparation process, the carbon material develops a pore with appropriate structure. By combining with silicon material, the pore structure provides a sufficient buffer space for volume expansion of the silicon material, thereby inhibiting volume expansion of the anode material. Moreover, the appropriate pore present in the carbon material also improves crush strength and structure stability of the carbon material. Secondly, performing a vapor deposition on the obtained carbon material by using silicon source gas for 30 min to 150 min. During the vapor deposition, the carbon material has an appropriate pore therein, which facilitates the silicon source gas to enter the carbon material and permeate interior of the carbon material through the pore therein, to allow the silicon material to be evenly filled inside the pore of the carbon material to obtain an active material, thereby increasing capacity of the anode material. Meanwhile, the appropriate pore structure present in the carbon material also provides a certain buffer space for volume expansion of the silicon material, and improves structure stability of the carbon material to a certain extent. By controlling deposition duration within the above range, on the one hand, the silicon material is sufficiently and uniformly filled in pores of the carbon material, facilitating to increase capacity of the anode material, while, appropriate filling of the silicon material reduces part of pores in the carbon material, thereby facilitating to improve structure stability and crush strength of the anode material. On the other hand, an excessive filling of the silicon material is reduced, and the pore structure in the anode material is controlled within an appropriate range, thereby providing a certain buffer space for volume expansion of the silicon material, inhibiting the volume expansion of the anode material, and improving cycling performance of the anode material. Finally, carbon coating the active material, so as to further isolates a direct contact of the active material and the electrolyte, thereby reducing occurrence of a side reaction on surface of the anode material, inhibiting excessive growth of solid electrolyte interface (SEI) film on surface of the anode material, minimizing consumption of active lithium ions, and further enhancing capacity, initial efficiency, and cycling performance of the anode material.

The preparation method of the present disclosure is described with reference to the following embodiments.

Step S10, carbonizing a mixture containing a carbon source and an activator at 800°C to 1100°C to obtain a carbon material with pores, where the carbon material has a total pore volume of 0.5 cm³/g to 1.6 cm³/g, and a crush strength of U₁ kN/cm², where 0.05≤U₁≤0.3.

In the present disclosure, the carbonizing may have a carbonization temperature of 800°C, 850°C, 900°C, 950°C, 1000°C or 1100°C, etc., which is not limited herein. It is understood that during the carbonizing, the activator has an activation effect increasing with the increase of the carbonization temperature. The higher the carbonization temperature, the better the activation effect of the activator. The more sufficient the activation of the carbon material, the less the proportion of the closed pore in the carbon material. Controlling the carbonization temperature within the above range achieves a regulation on the pore volume proportions of the closed and open pores in the carbon material, and thus preparing the carbon material with proper volume proportions of the open pores and closed pores.

In some embodiments, before step S10, the preparation method further includes: pre-activating the carbon source at 200°C to 300°C for 3 h to 5 h.

For example, the pre-activating may have a pre-activation temperature of 200°C, 230°C, 250°C, 260°C, 280°C or 300°C, etc., which is not limited herein. The pre-activating may have a pre-activation duration of 3 h, 3.5 h, 4 h, 4.5 h, 4.6 h, 4.8 h or 5 h, etc., which is not limited herein. It is understood that pre-activating the carbon source improves a reaction activity of the carbon source, improves a reaction efficiency between the carbon source and the activator, and promotes the carbonizing. Meanwhile, pre-activating the carbon source also remove an impurity on surface of the carbon source.

In some embodiments, the carbonizing has a carbonization duration of 1 h to 10 h, which may specifically be 1 h, 2 h, 3 h, 5 h, 6 h, 8 h, 9 h or 10 h, etc., or other value within the above range, which is not limited herein.

In some embodiments, the carbon source includes at least one of lignin, coconut shell, coal tar pitch, phenolic resin, starch, glucose, and rice husk.

In some embodiments, the activator includes at least one of potassium hydroxide and sodium hydroxide.

In some embodiments, a mass ratio of the carbon source and the activator is (5:1) to (1:10), which may specifically be 5:1, 5:1.5, 5:5, 5:6, 5:10, 1:1, 1:1.5, 1:2, 1:5, or 1:10, etc., which is not limited herein.

In some embodiments, the method further includes: acid pickling and water washing a carbonized product to a pH of 6.5 to 7.5, and performing solid-liquid separation, drying and sieving, to obtain the carbon material with pores.

In some embodiments, the pore in the carbon material includes micropore, mesopore and macropore, where the micropore accounts for a volume proportion of 60% to 97% of the total pore volume, which may specifically be 60%, 70%, 75%, 80%, 85%, 90%, 95%, 96%, or 97%, etc., or other value within the above range, which is not limited herein. It is understood that, controlling the volume proportion of the micropore in the carbon material increases adsorption capacity of the carbon material to the silicon material, and promotes diffusion of the silicon material in the carbon material, thereby improving deposition uniformity of the silicon material in the carbon material, and reducing deposition of the silicon material on surface of the carbon material. In the present disclosure, the volume proportion of the micropore in the carbon material is controlled within the above range, thus during deposition involving the silicon material and the carbon material, the deposition of the silicon material on surface of the carbon material is reduced, and the silicon material is allowed to be uniformly deposited in the pore of the carbon material instead of on its surface, thereby inhibiting volume expansion of the anode material, and improving electrochemical performance of the anode material.

In some embodiments, the carbon material includes at least one of biomass based porous carbon, synthetic polymer based porous carbon, and tar coal based porous carbon.

In some embodiments, the carbon material has a total pore volume of 0.5 cm³/g to 1.6 cm³/g, which may specifically be 0.5 cm³/g, 0.8 cm³/g, 1.0 cm³/g, 1.1 cm³/g, 1.15 cm³/g, 1.2 cm³/g, 1.3 cm³/g, 1.5 cm³/g or 1.6 cm³/g, etc., or any other value within the above range, which is not limited herein. It is understood that, the carbon material is rich in pores, which is able to store the silicon material and reserve a space for volume expansion of the silicon material, thereby relieving expansion effect of the anode material, and improving cycle stability of the battery prepared by the anode material.

In some embodiments, the pore in the carbon material includes an open pore and a closed pore.

In some embodiments, the closed pore in the carbon material accounts for a volume proportion of A% of the total pore volume, where 1.0≤A≤5.0, which may specifically be 1.0%, 1.2%, 1.5%, 2.0%, 2.5%, 3.0%, 3.5%, 4.0%, 4.5%, or 5.0%, etc., or other value within the above range, which is not limited herein. It is understood that, the volume proportion of the closed pore in the carbon material is controlled within the above range, allowing the carbon material to have appropriate open and closed pores. On the one hand, it facilitates to improve structure stability and crush strength of the carbon material; and on the other hand, during compounding the carbon material and silicon, the appropriate closed pores in the carbon material provides a certain buffer space for volume expansion of silicon, thereby inhibiting volume expansion of the anode material, and improving cycle performance of the anode material. For example, the closed pore in the carbon material accounts for a volume proportion of 1.5% to 4.0%.

In some embodiments, the open pore in the carbon material accounts for a volume proportion of B% of the total pore volume, where 95.0≤B≤99.0, which may specifically be 95.0%, 95.5%, 96.0%, 96.5%, 97.0%, 98.5%, 98.6%, 98.7%, 98.8%, or 99.0%, etc., or other value within the above range, which is not limited herein. It is understood that, the volume proportion of the open pore in the carbon material is within the above range, thus during compounding the carbon material and silicon, the silicon permeates and diffuses into the carbon material through the pore therein for filling. On the one hand, specific capacity of the anode material is increased. On the other hand, the carbon material, filled with the silicon material, has reduced pores, allowing to improve density of the anode material, and thereby improving structure stability of the anode material. For example, the open pore in the carbon material accounts for a volume proportion of 96.0% to 98.5%.

Step S20: performing a vapor deposition on the carbon material with pores by using silicon source gas for 30 min to 150 min to obtain an active material.

In some embodiments, the silicon source gas includes at least one of monosilane, disilane, dimethylsilane, dichlorosilane, trichlorosilane, and silicon tetrachloride.

In some embodiments, the vapor deposition has a temperature of 400°C to 600°C, which may specifically be 400°C, 450°C, 500°C, 520°C, 550°C, 560°C or 600°C, etc., or any other value within the above range, which is not limited herein.

In some embodiments, the vapor deposition has a heating rate of 1°C/min to 10°C/min, which may specifically be 1°C/min, 2°C/min, 3°C/min, 4°C/min, 5°C/min, 6°C/min, 7°C/min, 8°C/min, 9°C/min or 10°C/min, etc., but is not limited to the recited values, and other unrecited value within the numerical range is also applicable.

In some embodiments, the vapor deposition is performed under a protective atmosphere.

In some embodiments, the vapor deposition is performed under a protective atmosphere, where the protective atmosphere includes at least one of nitrogen, argon, helium, neon, krypton, and xenon.

In some embodiments, the vapor deposition is performed under a protective atmosphere, where a flow ratio of the silicon source gas and the protective atmosphere is (2:1):(1:4), which may specifically be 2:1, 2:1.5, 2:2, 2:3, 2:4, 1 1, 1:1.5, 1:2, 1:3, 1:4, etc., which is not limited herein.

Step S30, carbon coating the active material to obtain the anode material.

In some embodiments, the carbon coating includes at least one of a gas phase carbon coating, a liquid phase carbon coating, and a solid phase carbon coating.

In some embodiments, a process of the carbon coating includes: heating the active material, and then introducing the carbon source gas and the protective gas for thermal decomposition of the carbon source gas, to obtain the anode material.

In some embodiments, a process of the carbon coating includes: heating the active material, and then introducing the carbon source gas and the protective gas for thermal decomposition of the carbon source gas, to obtain the anode material, where the carbon source gas includes at least one of methane, ethylene, acetylene, ethane, propane, propylene, propyne, butane, cyclohexane, and carbon dioxide.

In some embodiments, a process of the carbon coating includes: heating the active material, and then introducing the carbon source gas and the protective gas for thermal decomposition of the carbon source gas, to obtain the anode material, where the protective gas includes at least one of nitrogen, argon, helium, neon, krypton, and xenon.

In some embodiments, a process of the carbon coating includes: heating the active material, and then introducing the carbon source gas and the protective gas for thermal decomposition of the carbon source gas, to obtain the anode material, where a flow ratio of the carbon source gas and thte protective gas is (1:20) to (1:2), which may specifically be 1:1, 1:1.5, 1:2, 20:1, 20:1.5, 20:2, which is not limited here.

In some embodiments, a process of the carbon coating includes: heating the active material, and then introducing the carbon source gas and the protective gas for thermal decomposition of the carbon source gas, to obtain the anode material, where the thermal decomposition has a temperature of 600°C to 800°C, and a duration of 30 min to 150 min.

For example, the thermal decomposition may have a temperature of 600°C, 650°C, 700°C, 750°C, 760°C, 780°C, 800°C, which is not limited herein. The thermal decomposition may specifically have a duration of 30 min, 45 min, 60 min, 70 min, 80 min, 100 min, 120 min, or 150 min, etc., which is not limited herein.

In some embodiments, a process of the carbon coating includes: mixing the active material and a liquid phase carbon source to obtain a mixture, and carbonizing, to obtain the anode material.

In some embodiments, a process of the carbon coating includes: mixing the active material and a liquid phase carbon source to obtain a mixture, and carbonizing, to obtain the anode material, where a mass ratio of the liquid phase carbon source and the active material is (1:2) to (1:20), which may specifically be 1:1, 1:5, 1:10, 1:15, 1:20, 2:1, 2:5, 2:10, 2:15, 2:20, etc., which is not limited herein.

In some embodiments, a process of the carbon coating includes: mixing the active material and a liquid phase carbon source to obtain a mixture, and carbonizing, to obtain the anode material, where the liquid phase carbon source includes at least one of n-hexane, toluene, benzene, xylene, methanol, ethanol, propanol, butanol, pentanol, acetone, butanone, 2-pentanone, methyl acetate, ethyl acetate, propyl acetate, butyl acetate, and pentyl acetate.

In some embodiments, a process of the carbon coating includes: mixing the active material and a liquid phase carbon source to obtain a mixture, and carbonizing, to obtain the anode material, where the carbonizing has a temperature of 600°C to 900°C, and a duration of 1 h to 5 h.

For example, the carbonizing may have a temperature of 600°C, 650°C, 700°C, 750°C, 760°C, 800°C or 900°C, etc., which is not limited herein. The thermal decomposition may have a temperature of 1 h, 1.5 h, 2 h, 2.5 h, 3 h, 3.5 h, 4 h or 5h, etc., which is not limited herein.

In some embodiments, a process of the carbon coating includes: mixing the active material and a solid phase carbon source to obtain a mixture, and carbonizing, to obtain the anode material.

In some embodiments, a process of the carbon coating includes: mixing the active material and a solid phase carbon source to obtain a mixture, and carbonizing, to obtain the anode material, where the carbonizing has a temperature of 600°C to 900°C, and a duration of 1 h to 5 h.

For example, the carbonizing may have a temperature of 600°C, 650°C, 700°C, 750°C, 760°C, 800°C or 900°C, etc., which is not limited herein. The thermal decomposition may have a temperature of 1 h, 1.5 h, 2 h, 2.5 h, 3 h, 3.5 h, 4 h or 5h, etc., which is not limited herein.

In some embodiments, mixing the active material and a solid phase carbon source to obtain a mixture, and carbonizing, to obtain the anode material, where the solid phase carbon source includes at least one of saccharides, esters, hydrocarbons, organic acids, and polymers.

In some embodiments, a process of the carbon coating includes: mixing the active material and a solid phase carbon source to obtain a mixture, and carbonizing, to obtain the anode material, where the solid phase carbon source includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some embodiments, a process of the carbon coating includes: mixing the active material and a solid phase carbon source to obtain a mixture, and carbonizing, to obtain the anode material, where a mass ratio of the solid phase carbon source and the active material is (1:1):(1:10).

In some embodiments, the preparation method further includes: shaping, sieving and demagnetizing a carbon coated product to obtain the anode material.

In some embodiments, the preparation method further includes: shaping, sieving and demagnetizing a carbon coated product to obtain the anode material, where the shaping includes at least one of crushing, pulverizing, air milling, or grinding.

In a fifth aspect, some embodiments of the present disclosure include a lithium ion battery. The battery includes the above anode material, or the anode material prepared by the above preparation method.

### Example 1

(1) 50 g of lignin was weighed and placed in a preheating furnace, and pre-activated at 300°C for 3 to obtain pre-activated lignin;
(2) 30 g of the pre-activated lignin and 15 g of potassium hydroxide were weighed, and ground for mixing uniformly to obtain a mixture. The mixture was then placed in a vacuum box furnace, heated to 800°C, and kept the temperature for 3 h;
(3) the carbonized product was acid pickled and water washed until pH was 7.0, and then filtered, dried and sieved to obtain a carbon material with pores;
(4) 4 g of the carbon material was weighed and placed in a tube furnace, heated to 460°C at 5°C/min. The tube furnace was introduced with disilane and nitrogen at a flow ratio of 1:2, and kept the temperature for 60 min to obtain an active materials; then heated to 650°C at 5°C/min, introduced with propane and nitrogen at a flow ratio of 2:7, and kept the temperature for 30 min; and
(5) the obtained sample was crushed, sieved and demagnetized to obtain the anode material.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.8 nm, and the anode material has Dₘᵢₙ of 2.1 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

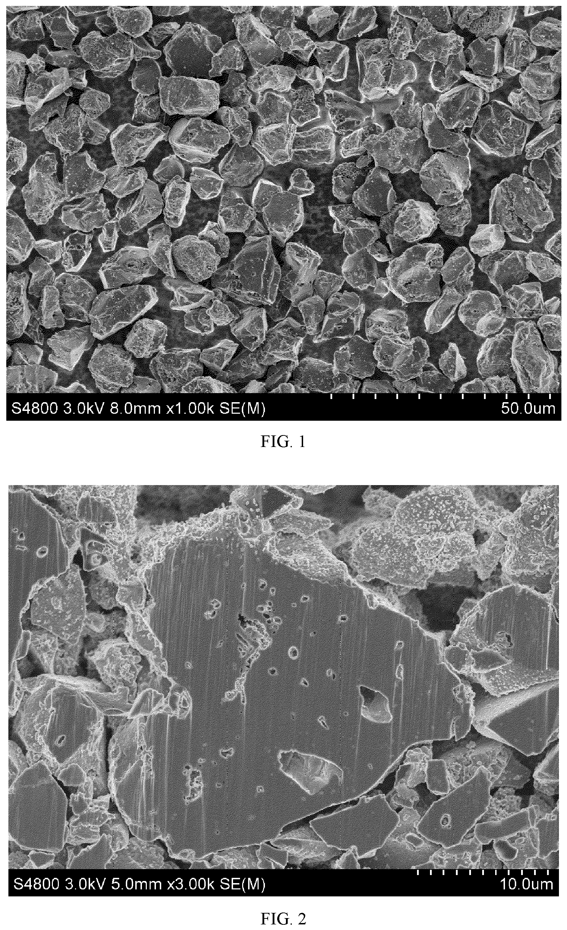

FIG. 1 is a scanning electron micrograph of the anode material prepared by Example 1 of the present disclosure.

FIG. 2 is a sectional view of the anode material prepared by Example 1 of the present disclosure. As shown in FIG. 2, the anode material has pores, and at least part of silicon is filled in the pores of the carbon material.

### Example 2

This example was conducted in the same way as Example 1 excepting that: in step (4), a time of keeping temperature for vapor deposition of disilane and the carbon material was 30 min. Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 2.4 nm, and the anode material has Dₘᵢₙ of 2.1 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 3

This example was conducted in the same way as Example 1 excepting that: in step (4), a time of keeping temperature for vapor deposition of disilane and the carbon material was 70 min. Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.8 nm, and the anode material has Dₘᵢₙ of 2.1 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 4

This example was conducted in the same way as Example 1 excepting that: in step (4), a time of keeping temperature for vapor deposition of disilane and the carbon material was 80 min. Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.8 nm, and the anode material has Dₘᵢₙ of 2.1 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 5

This example was conducted in the same way as Example 1 excepting that: in step (4), a time of keeping temperature for vapor deposition of disilane and the carbon material was 90 min. Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.8 nm, and the anode material has Dₘᵢₙ of 2.1 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 6

This example was conducted in the same way as Example 1 excepting that: in step (4), a time of keeping temperature for vapor deposition of disilane and the carbon material was 150 min. Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 4.9 nm, and the anode material has Dₘᵢₙ of 2.5 µm, D₅₀ of 8.9 µm, and Dₘₐₓ of 26.0 µm.

The parameters of the carbon material in this example are shown in Table 1.

The parameters of the anode material removed the silicon material in this example are shown in Table 2.

The parameters of the anode material in this example are shown in Table 3.

### Example 7

This example was conducted in the same way as Example 4 excepting that: in step (2), a temperature for carbonizing was 900°C. Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.9 nm, and the anode material has Dₘᵢₙ of 2.2 µm, D₅₀ of 8.6 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 8

This example was conducted in the same way as Example 4 excepting that: in step (2), a temperature for carbonizing was 1000°C. Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 4.0 nm, and the anode material has Dₘᵢₙ of 2.2 µm, D₅₀ of 8.6 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 9

This example was conducted in the same way as Example 4 excepting that: in step (2), a temperature for carbonizing was 1100°C. Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 4.3 nm, and the anode material has Dₘᵢₙ of 2.2 µm, D₅₀ of 8.6 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 10

(1) 50 g of lignin was weighed and placed in a preheating furnace, and pre-activated at 300°C for 3 to obtain pre-activated lignin;
(2) 30 g of the pre-activated lignin and 15 g of potassium hydroxide were weighed, and ground for mixing uniformly to obtain a mixture. The mixture was then placed in a vacuum box furnace, heated to 1000°C, and kept the temperature for 3 h;
(3) the carbonized product was acid pickled and water washed until pH was 7.0, and then filtered, dried and sieved to obtain a carbon material with pores;
(4) 4 g of the carbon material was weighed and placed in a tube furnace, heated to 400°C at 5°C/min. The tube furnace was introduced with disilane and nitrogen at a flow ratio of 1:2, and kept the temperature for 90 min to obtain an active materials; then heated to 650°C at 5°C/min, introduced with propane and nitrogen at a flow ratio of 2:7, and kept the temperature for 30 min; and
(5) the obtained sample was crushed, sieved and demagnetized to obtain the anode material.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.6 nm, and the anode material has Dₘᵢₙ of 2.2 µm, D₅₀ of 8.6 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 11

This example was conducted in the same way as Example 10 excepting that: in step (4), 4 g of the carbon material was weighed and placed in a tube furnace, heated to 510°C at 5°C/min. The tube furnace was introduced with disilane and nitrogen at a flow ratio of 1:2, and kept the temperature for 75 min to obtain an active materials; then heated to 650°C at 5°C/min, introduced with propane and nitrogen at a flow ratio of 2:7, and kept the temperature for 30 min.

Other conditions are completely the same as those in Example 10.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 4.2 nm, and the anode material has Dₘᵢₙ of 2.2 µm, D₅₀ of 8.6 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 12

This example was conducted in the same way as Example 10 excepting that: in step (4), 4 g of the carbon material was weighed and placed in a tube furnace, heated to 550°C at 5°C/min. The tube furnace was introduced with disilane and nitrogen at a flow ratio of 1:2, and kept the temperature for 70 min to obtain an active materials; then heated to 650°C at 5°C/min, introduced with propane and nitrogen at a flow ratio of 2:7, and kept the temperature for 30 min.

Other conditions are completely the same as those in Example 10.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 4.4 nm, and the anode material has Dₘᵢₙ of 2.2 µm, D₅₀ of 8.6 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 13

This example was conducted in the same way as Example 10 excepting that: in step (4), 4 g of the carbon material was weighed and placed in a tube furnace, heated to 600°C at 5°C/min. The tube furnace was introduced with disilane and nitrogen at a flow ratio of 1:2, and kept the temperature for 65 min to obtain an active materials; then heated to 650°C at 5°C/min, introduced with propane and nitrogen at a flow ratio of 2:7, and kept the temperature for 30 min.

Other conditions are completely the same as those in Example 1.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 4.7 nm, and the anode material has Dₘᵢₙ of 2.2 µm, D₅₀ of 8.6 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 14

(1) 30 g of coconut shell carbon and 15 g of potassium hydroxide were weighed, and ground for mixing uniformly to obtain a mixture. The mixture was then placed in a vacuum box furnace, heated to 1000°C, and kept the temperature for 3 h;
(2) the carbonized product was acid pickled and water washed until pH was 7.0, and then filtered, dried and sieved to obtain a carbon material with pores;
(3) 4 g of the carbon material was weighed and placed in a tube furnace, heated to 460°C at 5°C/min. The tube furnace was introduced with disilane and nitrogen at a flow ratio of 1:2, and kept the temperature for 80 min to obtain an active materials; then heated to 650°C at 5°C/min, introduced with propane and nitrogen at a flow ratio of 2:7, and kept the temperature for 30 min; and
(4) the obtained sample was crushed, sieved and demagnetized to obtain the anode material.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.6 nm, and the anode material has Dₘᵢₙ of 2.0 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 15

This example was conducted in the same way as Example 4 excepting that: in step (2), 30 g of the pre-activated lignin and 10 g of potassium hydroxide were weighed, and ground for mixing uniformly to obtain a mixture. The mixture was then placed in a vacuum box furnace, heated to 800°C, and kept the temperature for 3 h.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 4.1 nm, and the anode material has Dₘᵢₙ of 2.0 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 16

This example was conducted in the same way as Example 4 excepting that: in step (4), 4 g of the carbon material was weighed and placed in a tube furnace, heated to 460°C at 5°C/min. The tube furnace was introduced with disilane and nitrogen at a flow ratio of 1:2, and kept the temperature for 80 min to obtain an active materials. The active material and sucrose were mixed in a mass ratio of 1:1, then the mixture was placed in a high-temperature box furnace, introduced with nitrogen gas, and carbonized at 650°C for 5 h.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.6 nm, and the anode material has Dₘᵢₙ of 2.0 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 17

This example was conducted in the same way as Example 4 excepting that: in step (4), 4 g of the carbon material was weighed and placed in a tube furnace, heated to 460°C at 5°C/min. The tube furnace was introduced with disilane and nitrogen at a flow ratio of 1:2, and kept the temperature for 80 min to obtain an active materials. The active material and ethanol were mixed in a mass ratio of 1:2, then the mixture was placed in a high-temperature box furnace, introduced with nitrogen gas, and carbonized at 650°C for 2 h.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.6 nm, and the anode material has Dₘᵢₙ of 2.0 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 18

This example was conducted in the same way as Example 4 excepting that: in step (1), 100 g of coal tar pitch, 30 g of calcium oxide, and 15 g of potassium hydroxide were weighed and ground for mixing uniformly to obtain a mixture. The mixture was then placed in a vacuum box furnace, heated to 800°C, and kept the temperature for 3 h.

The anode material prepared by this example includes a carbon material and a silicon material, the carbon material has pores including open pores and closed pores, and at least part of the silicon material is distributed in the pores of the carbon material. The carbon material is tar coal based porous carbon, and the silicon material is amorphous silicon. The silicon material has an average particle size of 3.6 nm, and the anode material has Dₘᵢₙ of 2.0 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 19

This example was conducted in the same way as Example 4 excepting that: in step (2), 40 g of the pre-activated lignin and 10 g of potassium hydroxide were weighed, and ground for mixing uniformly to obtain a mixture. The mixture was then placed in a vacuum box furnace, heated to 800°C, and kept the temperature for 3 h.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.6 nm, and the anode material has Dₘᵢₙ of 2.0 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Example 20

This example was conducted in the same way as Example 4 excepting that: in step (2), 30 g of the pre-activated lignin and 10 g of potassium hydroxide were weighed, and ground for mixing uniformly to obtain a mixture. The mixture was then placed in a vacuum box furnace, heated to 800°C, and kept the temperature for 3 h.

The anode material prepared by this example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.6 nm, and the anode material has Dₘᵢₙ of 2.0 µm, D₅₀ of 8.5 µm, and Dₘₐₓ of 24.0 µm.

The parameters of the carbon material in this example are shown in Table 1.

The parameters of the anode material removed the silicon material in this example are shown in Table 2.

The parameters of the anode material in this example are shown in Table 3.

### Comparative example 1

This comparative example was conducted in the same way as Example 1 excepting that: in step (2), a temperature for carbonizing was 700°C. Other conditions are completely the same as those in Example 1.

The anode material prepared by this comparative example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.6 nm, and the anode material has Dₘᵢₙ of 2.0 µm, D₅₀ of 8.5 µm, and Dₘₐₓ of 24.0 µm.

The parameters of the carbon material in this comparative example are shown in Table 1.

The parameters of the anode material removed the silicon material in this comparative example are shown in Table 2.

The parameters of the anode material in this comparative example are shown in Table 3.

### Comparative Example 2

This comparative example was conducted in the same way as Example 4 excepting that: in step (2), a temperature for carbonizing was 1200°C. Other conditions are completely the same as those in Example 4.

The anode material prepared by this comparative example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 3.6 nm, and the anode material has Dₘᵢₙ of 2.0 µm, D₅₀ of 8.5 µm, and Dₘₐₓ of 24.0 µm.

The parameters of the carbon material in this comparative example are shown in Table 1.

The parameters of the anode material removed the silicon material in this comparative example are shown in Table 2.

The parameters of the anode material in this comparative example are shown in Table 3.

### Comparative Example 3

This comparative example was conducted in the same way as Example 1 excepting that: in step (4), a time of keeping temperature for vapor deposition of disilane and the carbon material was 15 min. Other conditions are completely the same as those in Example 1.

The anode material prepared by this comparative example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 1.0 nm, and the anode material has Dₘᵢₙ of 2.0 µm, D₅₀ of 8.5 µm, and Dₘₐₓ of 24.0 µm.

The parameters of the carbon material in this comparative example are the same as those in Example 1.

The parameters of the anode material removed the silicon material in this comparative example are shown in Table 2.

The parameters of the anode material in this comparative example are shown in Table 3.

### Comparative Example 4

This comparative example was conducted in the same way as Example 1 excepting that: in step (4), a time of keeping temperature for vapor deposition of disilane and the carbon material was 180 min. Other conditions are completely the same as those in Example 1.

The anode material prepared by this comparative example includes a carbon material and a silicon material, the carbon material has pores including open pores and closed pores, and at least part of the silicon material is distributed in the pores of the carbon material. The carbon material is biomass based porous carbon, and the silicon material is amorphous silicon. The silicon material has an average particle size of 7.6 nm, and the anode material has Dₘᵢₙ of 2.7 µm, D₅₀ of 9.5 µm, and Dₘₐₓ of 27.0 µm.

The parameters of the carbon material in this comparative example are the same as those in Example 1.

The parameters of the anode material removed the silicon material in this comparative example are shown in Table 2.

The parameters of the anode material in this comparative example are shown in Table 3.

### Testing Method

### (1) Test method of volume proportion of closed pore, volume proportion of open pore, and total volume in the carbon material, the anode material, and the anode material removed the silicon material

The volume proportion of the open pore is defined as a ratio of a volume of the open pore and the total volume, and the volume proportion of the closed pore is defined as a ratio of a volume of the closed pore and the total volume. The volume of the open pore was measured by a nitrogen adsorption-desorption instrument, which adopted iBOX26 type instrument of PhysiChem Instruments. The volume of the closed pore was determined by a volume difference method. 5 g of the carbon material or the anode material was placed in a 10 mL measuring cylinder, added 6 mL of pure water, then ultrasonicated for 1 h. When the carbon material or the anode material was completely dissolved in water, it was further ultrasonicated for 30 min. At this moment, liquid level value of the measuring cylinder was recorded. The volume of the pure water was subtracted from the liquid level value to obtain a volume of skeleton and the closed pore of the carbon material or the anode material. The volume of the skeleton is a ratio of mass and true density of the carbon material or the anode material, so as to obtain the volume of the closed pore. The total volume is the sum of volumes of the skeleton, the open pore, and the closed pore.

### (2) Test method of crush strengths of the carbon material and the anode material

5 g of the carbon material or the anode material was placed in a metal sleeve with a diameter of 1.3 cm² and stood for 1 min under a plurality of different pressures, then the pressed material was taken out, and tested for total pore volume by a pore size analyzer. When the total pore volume of the pressed material had a reduction ratio of 0 to 2% over the total pore volume of the raw material, the crush strength of the material was a strength P the material subjected to under the pressure, i.e., P=F/S. When particles of the carbon material or the anode material crushed, the total pore volume of the material decreased.

### (3) Etching Test

The anode material was immersed into a concentrated nitric acid with a mass fraction of 68% for 1 h, then the anode material was added drop wise with an HF acid solution with a mass fraction of 20% to generate yellow smoke, and repeated adding until no more yellow smoke generated in the solution; finally added with a concentrated nitric acid with a mass fraction of 68% for digesting residue, and washed and dried, to obtain the anode material removed the silicon material.

### (4) Test method of true density of the anode material

A JW-M100 type true density tester of JWGB Instruments was adopted for testing. 5 g of the anode material was placed in a metal sleeve with a diameter of 1.3 cm² and stood for 30 min under a pressure of 5T, then ground and sieved through a 1000-mesh screen, and the obtained sample was dissolved in an appropriate solvent. After assembling the testing device and performing adjustment and calibration according to manual, the prepared sample was added therein and preliminary adjusted, and then the testing device was initiated for testing. During the testing, temperature and gas collection were continuously monitored and recorded. When the gas collected in collector reached a certain level, the experiment was terminated. A proportion of the objective substance in the sample was calculated depending on the obtained data.

### (5) Test method of specific surface area of the anode material

A TriStar 3000 surface area and pore size analyzer of Micromeritics, American was adopted for measuring the specific surface area.

### (6) Test method of pore size distribution of pores of carbon material

An iPore620 type pore size tester of PhysiChem Instruments was adopted for testing the carbon material by a BET pore size distribution test method. A pore size distribution data of the carbon material was obtained through DFT simulation analysis by using an isothermal adsorption characteristic curve of nitrogen gas, and then a total pore volume, and the volume proportions of micropore, mesopore and macropore of the carbon material in the total pore volume were obtained.

### (7) Test method of mass content of silicon in the anode material

A sample was dried overnight and placed in a corundum crucible. The crucible was placed in a muffle furnace (SA2-9-17TP of Nanyang Xinyu) at 1200°C for 480 minutes to complete combustion of carbon and oxidation reaction of silicon or silicon monoxide to silica; during the process, weight m₀ of the crucible, weight m₁ of the sample, and total weight m₂ of the crucible and product after burning were recorded, and the silicon content was calculated according to the following formula: Si% = (m₂-m₀)/m₁×28.09/60.09×100%.

### (8) Test method of particle size of the anode material

A Malvern laser particle size analyzer was adopted for testing a particle size distribution range of the composite anode material.

### (9) Test of electrochemical performance

The electrochemical cycle performance was tested by the following method: the anode material each prepared by Examples 1 to 18 and Comparative Examples 1 to 4, a conductive agent, and a binder in a mass percentage of 94:1:5 were dissolved in a solvent for mixing, with a solid content controlled to be 50%, applied to a copper foil current collector, and vacuum dried, to prepare anode plates; 18650 cylindrical single batterier were assembled by conventional production process by further using a ternary cathode plate prepared by a conventional mature process, 1 mol/L of electrolyte containing lithium hexafluorophosphate LiPF₆/(ethylene carbonate EC + dimethyl carbonate DMC + methyl ethyl carbonate EMC (v/v=1:1:1)), Celgard 2400 separator, and a shell. The test for charging and discharging of the cylindrical batterier was performed by a LAND cell test system purchased from Wuhan Jinnuo Electronics Co., Ltd, under room temperature, at 0.2C constant current, and a voltage controlled to be 2.75 V to 4.2 V. An initial reversible capacity, an initial charging capacity, and an initial discharging capacity were obtained. The initial Coulombic efficiency = the initial discharging capacity / the initial charging capacity.

The cycling was repeated for 50 times, and a thickness H1 of the plate of the lithium ion battery was measured by using a micrometer, thus an expansion ratio after 50 cycles = (H1-H0)/H0×100%.

The cycling was repeated for 50 times, and an discharging capacity was recorded as remaining capacity of the lithium ion batteries, thus an capacity retention ratio = the remaining capacity / the initial capacity × 100%.

The test results are shown in Table 1 to Table 2

**Table 1 Performance parameters of the carbon materials prepared by Examples and Comparative Examples**

| | Volume proportion A of the open pore (%) | Volume proportion B of the closed pore (%) | Crush Strength U₁ (kN/cm²) | Total pore volume (cm³/g) | Proportion of the micropore (%) |
|---|---|---|---|---|---|
| Example 1 | 95.7 | 4.3 | 0.25 | 0.60 | 65.0 |
| Example 2 | The same as Example 1 | | | | |
| Example 2 | The same as Example 1 | | | | |
| Example 4 | The same as Example 1 | | | | |
| Example 5 | The same as Example 1 | | | | |
| Example 6 | The same as Example 1 | | | | |
| Example 7 | 96.2 | 3.8 | 0.19 | 0.92 | 75.1 |
| Example 8 | 96.9 | 3.1 | 0.12 | 1.31 | 86.3 |
| Example 9 | 98.8 | 1.2 | 0.06 | 1.58 | 96.8 |
| Example 10 | 96.9 | 3.1 | 0.12 | 1.32 | 86.3 |
| Example 11 | The same as Example 10 | | | | |
| Example 12 | The same as Example 10 | | | | |
| Example 13 | The same as Example 10 | | | | |
| Example 14 | 96.7 | 3.3 | 0.16 | 1.20 | 87.0 |
| Example 15 | 95.3 | 4.7 | 0.27 | 0.61 | 61.3 |
| Example 16 | The same as Example 1 | | | | |
| Example 17 | The same as Example 1 | | | | |
| Example 18 | 95.4 | 4.6 | 0.28 | 0.56 | 63.5 |
| Example 19 | 95.1 | 4.9 | 0.26 | 0.60 | 65.0 |
| Example 20 | 95.4 | 4.6 | 0.29 | 0.51 | 63.6 |
| Comparative Example 1 | 92.9 | 7.1 | 0.31 | 0.48 | 58.0 |
| Comparative Example 2 | 99.0 | 1.0 | 0.02 | 1.81 | 93.7 |

From the test results of Table 1, it can be seen that Examples 1 to 20 of the present disclosure prepared carbon materials. The carbon material has a pore. The carbon material has a total pore volume of 0.5 cm³/g to 1.6 cm³/g. The carbon material has appropriate pores providing sufficient storage space for the silicon material, relieving volume expansion of the silicon material. In addition, the carbon material has a crush strength of U₁ kN/cm², where 0.05≤U₁≤0.3. The crush strength of the carbon material is closely related to the pores in the carbon material. The carbon material has the crush strength within the above range, allowing the carbon material to have an excellent structure stability, and allowing a carbon material compounded with the silicon material also to have an excellent structure stability. Thus, collapse and crush of structure of the carbon material caused by volume expansion of the silicon material during lithiation and delithiation are reduced, and occurrence of a side reaction is reduced, thereby improving capacity and cycling performance of the anode material.

Compared with Example 1, in the preparation process of the carbon material of Comparative Example 1, the temperature for carbonizing was reduced. Thus, the carbon material has a weakened activation degree, reduced pores therein, and a relatively high crush strength. After the subsequent compounding with the silicon material, the carbon material is difficult to bear expansion stress caused by the silicon material during lithiation and delithiation, due to reduced space for relieving volume expansion of the silicon material therein, thereby the carbon material is prone to crushing, and cycle stability of the anode material prepared by the carbon material is further affected.

Compared with Example 1, in the preparation process of the carbon material of Comparative Example 2, the temperature for carbonizing was increased. Thus, the carbon material has an enhanced activation degree, increased pores therein, and a too low crush strength. After the subsequent compounding with the silicon material, the carbon material is difficult to bear expansion stress caused by the silicon material during lithiation and delithiation, thereby the carbon material is prone to crushing, and cycle stability of the anode material prepared by the carbon material is further affected.

**Table 2 Performance parameters of the anode materials removed the silicon material of Examples and Comparative examples**

| | Volume proportion of | Volume proportion of | Total pore volume | Proportion of the |
|---|---|---|---|---|
| | the open pore (%) | the closed pore (%) | (cm³/g) | micropore (%) |
| Example 1 | 94.0 | 6.0 | 0.56 | 60.4 |
| Example 2 | 94.1 | 5.9 | 0.57 | 63.7 |
| Example 2 | 94.0 | 6.0 | 0.56 | 61.1 |
| Example 4 | 94.2 | 5.8 | 0.55 | 56.9 |
| Example 5 | 94.4 | 5.6 | 0.53 | 55.1 |
| Example 6 | 94.9 | 5.1 | 0.50 | 50.5 |
| Example 7 | 94.8 | 5.2 | 0.85 | 70.4 |
| Example 8 | 95.9 | 4.1 | 1.07 | 82.0 |
| Example 9 | 97.1 | 2.9 | 1.36 | 90.5 |
| Example 10 | 95.8 | 4.2 | 1.23 | 82.3 |
| Example 11 | 95.9 | 4.1 | 1.19 | 83.0 |
| Example 12 | 95.6 | 4.4 | 1.17 | 84.4 |
| Example 13 | 95.4 | 4.6 | 1.21 | 84.6 |
| Example 14 | 95.3 | 4.7 | 1.06 | 80.9 |
| Example 15 | 94.1 | 5.9 | 0.49 | 55.9 |
| Example 16 | 93.9 | 6.1 | 0.56 | 60.1 |
| Example 17 | 94.1 | 5.9 | 0.57 | 63.7 |
| Example 18 | 94.1 | 5.9 | 0.57 | 63.7 |
| Example 19 | 94.3 | 5.7 | 0.57 | 63.7 |
| Example 20 | 94.2 | 5.8 | 0.45 | 61.6 |
| Comparative Example 1 | 92.6 | 7.4 | 0.41 | 52.4 |
| Comparative Example 2 | 97.7 | 2.3 | 1.65 | 91.4 |
| Comparative Example 3 | 95.6 | 4.4 | 0.59 | 64.5 |
| Comparative Example 4 | 95.2 | 4.8 | 0.52 | 63.2 |

**Table 3 Performance parameters of the anode materials prepared by Examples and Comparative Examples**

| Examples | Volume proporti on P₁ of the open pore (%) | Volume proporti on P₂ of the closed pore (%) | Crush Strength U₂ (kN/cm²) | True density (g/cm³) | Mass content of silicon (%) | Specific surface area (m²/g) | Capacity (mAh/g) | Initial efficie ncy (%) | Capac ity retenti on ratio after 50 cycles (%) | Expansion ratio (%) | Total pore volume (cm³/g) |
|---|---|---|---|---|---|---|---|---|---|---|---|
| Example 1 | 12.5 | 4.6 | 0.41 | 1.2 | 9.5 | 16.5 | 1493.9 | 83.1 | 75.2 | 32.4 | 0.06 |
| Example 2 | 19.3 | 4.7 | 0.37 | 0.7 | 25.1 | 18.6 | 1063.1 | 67.5 | 93.4 | 28.9 | 0.10 |
| Example 3 | 9.6 | 4.5 | 0.49 | 1.4 | 45.8 | 8.4 | 1742.3 | 87.2 | 76.6 | 35.4 | 0.05 |
| Example 4 | 4.2 | 4.8 | 0.60 | 1.7 | 50.1 | 3.9 | 1921.6 | 90.2 | 79.2 | 36.2 | 0.04 |
| Example 5 | 3.0 | 4.6 | 0.73 | 1.9 | 53.2 | 2.8 | 2013.4 | 91.4 | 77.4 | 37.2 | 0.03 |
| Example 6 | 1.0 | 4.7 | 0.78 | 2.2 | 56.0 | 1.5 | 2254.3 | 91.7 | 78.7 | 40.7 | 0.01 |
| Example 7 | 3.6 | 3.2 | 0.68 | 1.7 | 50.1 | 3.5 | 1921.3 | 91.0 | 80.4 | 34.2 | 0.06 |
| Example 8 | 2.0 | 1.6 | 0.93 | 1.7 | 50.0 | 2.1 | 1924.5 | 92.4 | 86.9 | 34.0 | 0.08 |
| Example 9 | 1.6 | 0.3 | 1.26 | 1.8 | 50.1 | 2.0 | 1920.8 | 92.4 | 85.6 | 37.1 | 0.10 |
| Example 10 | 2.0 | 1.4 | 0.96 | 1.7 | 50.0 | 2.0 | 1917.9 | 92.3 | 86.5 | 33.8 | 0.08 |
| Example 11 | 2.0 | 1.8 | 0.88 | 1.8 | 50.2 | 1.8 | 1924.1 | 92.3 | 84.2 | 36.1 | 0.07 |
| Example 12 | 2.0 | 1.9 | 0.83 | 1.7 | 49.9 | 1.8 | 1915.8 | 92.3 | 83.1 | 37.8 | 0.07 |
| Example 13 | 2.0 | 2.0 | 0.82 | 1.8 | 49.7 | 1.9 | 1914.6 | 92.1 | 80.5 | 39.4 | 0.07 |
| Example 14 | 2.0 | 1.9 | 0.87 | 1.6 | 50.1 | 3.0 | 1923.1 | 92.3 | 86.5 | 34.2 | 0.05 |
| Example 15 | 4.5 | 4.8 | 0.59 | 1.7 | 50.3 | 4.2 | 1924.6 | 90.0 | 75.7 | 35.7 | 0.05 |
| Example 16 | 4.1 | 4.5 | 0.62 | 1.7 | 50.2 | 3.5 | 1920.4 | 89.8 | 76.0 | 36.5 | 0.05 |
| Example 17 | 4.4 | 4.8 | 0.57 | 1.7 | 49.8 | 4.3 | 1916.4 | 88.6 | 75.5 | 36.9 | 0.06 |
| Example 18 | 4.3 | 4.4 | 0.63 | 1.9 | 50.1 | 3.9 | 1925.3 | 90.6 | 75.9 | 36.5 | 0.04 |
| Example 19 | 3.2 | 4.6 | 0.59 | 1.6 | 48.9 | 3.9 | 1903.7 | 89.4 | 75.5 | 36.9 | 0.05 |
| Example 20 | 1.1 | 3.5 | 0.90 | 1.7 | 49.7 | 1.7 | 1904.6 | 90.5 | 76.1 | 36.8 | 0.03 |
| Comparative Example 1 | 20.3 | 6.1 | 0.33 | 1.2 | 39.5 | 17.1 | 1492.5 | 80.4 | 68.4 | 33.6 | 0.05 |
| Comparative Example 2 | 1.8 | 0.08 | 1.87 | 1.7 | 50.1 | 2.0 | 1923.9 | 92.0 | 70.1 | 41.5 | 0.03 |
| Comparative Example 3 | 64.0 | 4.6 | 0.31 | 0.5 | 15.1 | 43.6 | 1063.1 | 67.5 | 89.4 | 28.9 | 0.14 |
| Comparative Example 4 | 0.2 | 4.6 | 1.56 | 2.2 | 60.7 | 0.8 | 2341.4 | 90.5 | 65.8 | 45.2 | 0.01 |

From the test results of Table 3, it can be seen that Examples 1 to 20 prepared anode materials. The anode material includes a carbon material and a silicon material. The carbon material has pores, and at least part of the silicon material is distributed in the pore of the carbon material. Thus capacity of the anode material is increased. Additionally, the carbon material, filled with the silicon material, has reduced pores, allowing to improve density of the anode material, and thereby improving structure stability and cycling performance of the anode material. Meanwhile, the anode material has a pore including an open pore and a closed pore. The closed pore has a pore volume accounting for a volume proportion of P₁% of the anode material, where 0.1≤P₁≤5. The open pore has a pore volume accounting for a volume proportion of P₂% of the anode material, where 0.1≤P₂≤20. And, the anode material has a crush strength of U₂ kN/cm², where 0.35≤U₂≤1.5. The closed pore in the anode material has the pore volume accounting for a volume proportion within the above range, which allows appropriate open and closed pores present in the anode material, thereby improving structure stability and crush strength of the anode material, reducing probability of crush of the anode material during cycling, and improving cycling performance of the anode material. Moreover, the appropriate closed pore in the anode material provides a certain buffer space for volume expansion of the silicon material, thereby inhibiting volume expansion of the anode material, reducing collapse and crush of structure of the carbon material caused by the volume expansion during lithiation and delithiation, and improving cycling performance of the anode material. In addition, the open pore in the anode material has the pore volume accounting for a volume proportion within the above range, on the one hand, this allows the silicon material to fill the pore of the carbon material for increasing capacity of the anode material; on the other hand, the carbon material, filled with the silicon material, has reduced inner pores, allowing to improve density of the anode material, and thereby improving structure stability and crush strength of the anode material. Moreover, the open pore in the anode material in an appropriate range provides a certain buffer space for volume expansion of the silicon material, inhibiting volume expansion of the anode material, thereby reducing collapse and crush of structure of the carbon material caused by the volume expansion during lithiation and delithiation, and improving cycling performance of the anode material. Furthermore, the open pore in the anode material has the pore volume accounting for a volume proportion within the above range, reducing contact area between an electrolyte and the anode material, thereby making the electrolyte not to easily penetrate into the anode material, then effectively reducing occurrence of a side reaction between the anode material and the electrolyte, and improving electrochemical performance of the anode material. In summary, controlling volume proportions of pore volumes of the closed and open pores in the anode material within appropriate ranges allows appropriate closed and open pores present in the anode material, improving the crush strength of the anode material by a synergistic effect between the closed and open pores, and balancing the volume proportion of the closed pore, the volume proportion of the open pores, and the crush strength of the anode material, thereby inhibiting volume expansion of the anode material, improving structure stability of the anode material, and further improving electrochemical performance of the anode material.

Comparing the test data of Examples 1 to 6, it can be seen that as the duration of the vapor deposition of the silicon source gas and the carbon material increases, a mass content of silicon in the anode material increases, as well as to the capacity of the anode material increases. Meanwhile, due to the increased deposition of silicon, the anode material has decreased volume proportion of the open pore, reduced total pore volume, and increased crush strength, while the anode material also has increased expansion ratio, and slightly decreased cycling performance.

Comparing the test data of Example 4 and 7 to 9, it can be seen as the temperature for carbonizing during preparing the carbon material increases, the volume proportion of the closed pore in the anode material decreases, as well as the anode material has reduced pores and increased expansion ratio. While, due to the increased crush strength of the anode material, the cycling performance of the anode material improves.

Comparing the test data of Examples 10 to 13, it can be seen that as a decomposition temperature of disilane increases, a decomposition rate of disilane accelerates, thus some internal pores of the carbon material are unfilled to form the closed pore, leading to an increased volume proportion of the closed pore in the anode material. However, the increased decomposition temperature may cause amorphous silicon of the anode material to transform into crystalline silicon, resulting in an increased expansion effect of the anode material. Meanwhile, the increased closed pores in the anode material lead to a slightly decreased crush strength of the material, thereby reducing the cycling performance of the anode material.

Compared with Example 1, in the anode material prepared by Comparative Example 1, in the preparation process of the carbon material, the temperature for carbonizing the carbon source and the activator was decreased. Thus, the carbon material has a weakened activation degree, a decreased total pore volume, a reduced pore structure, and a decreased volume proportion of the micropore, and the silicon material is difficult to uniformly deposit in the carbon material, resulting in an increased expansion ratio of the anode material, and an excessive proportion of the closed pore in the carbon material. After the deposition of the carbon material and the silicon material, the increased closed pore of the carbon material results in a decreased crush strength of the anode material, and the anode material tends to be crushed during cycling, leading to decreased capacity and cycling performance of the anode material.

Comparing with Example 4, in the anode material prepared by Comparative Example 2, in the preparation process of the carbon material, the temperature for carbonizing the carbon source and the activator was increased. Thus, the carbon material has a increased activation degree, and a decreased volume proportion of the closed pore. After the deposition with the silicon material, the reduced open pore of the anode material results in an increased crush strength of the anode material. But the space in the anode material for relieving volume expansion of the silicon material is reduced, thus the expansion ratio of the anode material is increased, leading to decreased cycling performance of the anode material.

Comparing with Example 1, in the anode material prepared by Comparative Example 3, the too short duration of the vapor deposition of the silicon source gas and the carbon material results in a less silicon content deposited in the carbon material, leading to a decreased capacity of the anode material.

Comparing with Example 1, in the anode material prepared by Comparative Example 4, the too long duration of the vapor deposition of the silicon source gas and the carbon material results in an increased silicon content deposited in the carbon material, leading to a increased capacity of the anode material. Meanwhile, the open pore of the anode material is reduced, and the crush strength of the anode material is increased. But the space in the anode material for relieving volume expansion of the silicon material is too less, thus the expansion ratio of the anode material is increased, leading to decreased cycling performance of the anode material.

The above is only preferred embodiment of the present disclosure and is not intended to limit the present disclosure, and any modifications, equivalent substitutions, improvements and the like made within the spirit and principle of the present disclosure should be included within the scope of the present disclosure.

## Claims

1. A carbon material, **characterized in that** the carbon material has a pore, the carbon material has a total pore volume of 0.5 cm³/g to 1.6 cm³/g, and the carbon material has a crush strength of U₁ kN/cm², wherein 0.05≤U₁≤0.3.

2. The carbon material according to claim 1, **characterized in that** the pore in the carbon material comprises an open pore and a closed pore, and the carbon material comprises at least one of the following features:
(1) the closed pore in the carbon material accounts for a volume proportion of A% of the total pore volume, wherein 1.0≤A≤5.0;
(2) the open pore in the carbon material accounts for a volume proportion of B% of the total pore volume, wherein 95.0≤B≤99.0; and
(3) the pore in the carbon material comprises micropore, mesopore and macropore, wherein the micropore accounts for a volume proportion of 60% to 97% of the total pore volume.

3. The carbon material according to claim 1, **characterized in that** the carbon material comprises at least one of biomass based porous carbon, synthetic polymer based porous carbon, and tar coal based porous carbon.

4. An anode material, **characterized in that** the anode material comprises a carbon material and a silicon material, wherein the carbon material has a pore, and at least part of the silicon material is distributed in the pore of the carbon material, and wherein an anode material removed the silicon material has a total pore volume of 0.5 cm³/g to 1.6 cm³/g, and a crush strength of U₁ kN/cm², wherein 0.05≤U₁≤0.3.

5. The anode material according to claim 4, **characterized in that** the pore in the carbon material comprises an open pore and a closed pore, and the carbon material comprises at least one of the following features:
(1) the closed pore in the carbon material accounts for a volume proportion of A% of the total pore volume, wherein 1.0≤A≤5.0;
(2) the open pore in the carbon material accounts for a volume proportion of B% of the total pore volume, wherein 95.0≤B≤99.0; and
(3) the pore in the carbon material comprises micropore, mesopore and macropore, wherein the micropore accounts for a volume proportion of 60% to 97% of the total pore volume.

6. The anode material according to claim 4, **characterized in that** the carbon material comprises at least one of biomass based porous carbon, synthetic polymer based porous carbon, and tar coal based porous carbon.

7. An anode material, **characterized in that** the anode material comprises a carbon material and a silicon material, wherein the carbon material has pores, and at least part of the silicon material is distributed in the pore of the carbon material;
the anode material has a pore comprising an open pore and a closed pore, wherein the closed pore has a pore volume accounting for a volume proportion of P₁% of the anode material, wherein 0.1≤P₁≤5, and wherein the open pore has a pore volume accounting for a volume proportion of P₂% of the anode material, wherein 0.1≤P₂≤20; and
the anode material has a crush strength of U₂ kN/cm², wherein 0.35≤U₂≤1.5.

8. The anode material according to claim 7, **characterized in that** the anode material comprises at least one of the following features:
(1) an anode material removed the silicon material has a total pore volume of 0.3 cm³/g to 1.5 cm³/g;
(2) an anode material removed the silicon material has a pore comprising micropore, mesopore and macropore, wherein the micropore accounts for a volume proportion of 50% to 90% of the total pore volume;
(3) closed pore in an anode material removed the silicon material accounts for a volume proportion of 3.0% to 6.0% of the total pore volume; and
(4) open pore in an anode material removed the silicon material accounts for a volume proportion of 94.0% to 97.0%.

9. The anode material according to claim 7, **characterized in that** the anode material comprises at least one of the following features:
(5) the silicon material comprises at least one of amorphous silicon, crystalline silicon, silicon oxide, or silicon alloy; and
(6) the silicon material has an average particle size of 1 nm to 5 nm.

10. The anode material according to claim 7, **characterized in that** the anode material, with a mass of 100%, contains silicon element accounting for a mass content of 10% to 85%.

11. The anode material according to claim 7, **characterized in that** the anode material has a true density of ρ g/cm³, wherein 1.2≤ρ≤3.0.

12. The anode material according to claim 7, **characterized in that** the anode material has a total pore volume of 0.01 cm³/g to 0.10 cm³/g.

13. The anode material according to claim 7, **characterized in that** the anode material has particle sizes satisfying 1 µm≤Dₘᵢₙ≤3 µm, 6 µm≤D₅₀≤8 µm, and Dₘₐₓ≤30 µm.

14. The anode material according to claim 7, **characterized in that** the anode material has a specific surface area of 0.8 m²/g to 20 m²/g.

15. A battery, **characterized in that** the battery comprises the carbon material according to any one of claims 1 to 3, or the anode material according to any one of claims 4 to14.
